# EUROPÄISCHE PATENTSCHRIFT

(11) **EP 3 012 636 B1**
(45) Veröffentlichungstag und Bekanntmachung des Hinweises auf die Patenterteilung: **14.08.2019**
(21) Anmeldenummer: 15188282.6
(22) Anmeldetag: 05.10.2015
(51) Int. Cl.: G01P 3/488, G01D 5/14, G01D 5/244

(54) **GEBERRAD**
ENCODER WHEEL
ROUE DE TRANSMISSION

(30) Priorität: 24.10.2014 DE 102014015673
(43) Veröffentlichungstag der Anmeldung: 27.04.2016
(73) Patentinhaber: Carl Freudenberg KG, 69469 Weinheim (DE)
(72) Erfinder: Neuberger, Soeren, 68766 Hockenheim (DE); Feurer, Georg, 69469 Weinheim (DE)

(56) Entgegenhaltungen:
- EP-A2- 1 988 400
- GB-A- 2 237 391
- JP-A- 2002 013 947
- US-A1- 2002 125 882
- US-B1- 6 184 678

## Beschreibung

Die Erfindung betrifft ein Geberrad nach dem Oberbegriff des Patentanspruchs 1.

Bauteile zur Drehzahlerfassung einer Welle sind bereits aus dem Stand der Technik bekannt. Diese Bauteile dienen bei Verbrennungsmotoren der Erfassung des oberen und unteren Totpunkts einer Kurbelwelle sowie eines Drehwinkels der Kurbelwelle. Häufig verfügen diese Bauteile über eine Lücke oder Aussparung, um eine Kodierung zu erzeugen.

Vor diesem Hintergrund ist aus der EP 1 764 488 B1 bereits ein Geberrad bekannt, welches eine Zahnstruktur im Wesentlichen nach Art eines Zahnrads aufweist. Diese Zahnstruktur weist eine Vielzahl regelmäßiger einander umfänglich abfolgender Zahnteile und mindestens eine Unregelmäßigkeit in Form eines Plateaus auf.

Konkret ist aus der EP 1 764 488 B1 ein Geberrad bekannt geworden, das zur Signalerzeugung eine gewellte Zahnstruktur aufweist, die obere und untere Zahnteile aufweist. Dieses Geberrad beansprucht einen relativ großen Bauraum in radialer Richtung und hat überdies ein hohes Gewicht.

Aus der US 2002/0125882 A1 ist ein Geberrad bekannt, welches in dem Axialabschnitt mit Ausnehmungen versehen ist.

Aus der JP 2002-13947 ist ein Geberrad bekannt, bei welchem Abschnitte des Axialflansches radial nach innen abgebogen sind.

Der Erfindung liegt daher die Aufgabe zugrunde, ein Geberrad der eingangs genannten Art derart auszugestalten und weiterzubilden, dass dieses bei möglichst geringem Gewicht in radialer Richtung platzsparend einsetzbar ist.

Die vorliegende Erfindung löst die zuvor genannte Aufgabe durch die Merkmale des Patentanspruchs 1.

Erfindungsgemäß ist zunächst erkannt worden, dass das Geberrad gemäß der EP 1 764 488 B1 einen relativ großen Bauraum in radialer Richtung beansprucht, da dessen Zahnstruktur obere und untere Zahnteile aufweist, die sich über deren gesamte axiale Länge erstrecken. Darauf ist erkannt worden, dass durch axiale Verkürzung von Zahnteilen in radialer Richtung Bauraum eingespart werden kann. Durch das Verkürzen von Zahnteilen können sich diese in axialer Richtung nicht mehr weit erstrecken und daher nicht mehr an andere Bauteile anstoßen, die radial benachbart sind. Es wurde überraschend festgestellt, dass Bereiche von Zahnteilen für die Signalerzeugung auch gar nicht notwendig sind. Damit während der Fertigung des Geberrads dessen Robustheit, nämlich eine hohe Steifigkeit, erhalten bleibt, wird ein Zahnteil in axialer und radialer Richtung nur teilweise ausgespart. Dies erleichtert die Herstellbarkeit im Vergleich zur Ausbildung einer vollständigen Aussparung. Erfindungsgemäß wird Material nur an den Stellen eingesetzt, an denen es benötigt wird. Somit ist es möglich, radialen Bauraum zu verringern und Gewicht einzusparen.

Die unteren Zahnteile, nämlich die Wellentäler, sind erfindungsgemäß gegenüber den oberen Zahnteilen, also den Wellenbergen, in axialer Richtung verkürzt ausgebildet. Hierdurch wird in radialer Richtung nach innen Bauraum eingespart.

Die oberen Zahnteile ragen über die unteren Zahnteile in axialer Richtung hinaus und sind im Querschnitt jeweils bogenförmig ausgebildet, wobei die beiden Endkanten eines jeden Bogens auf einer zu einem Durchgang konzentrischen gedachten Zylindermantelfläche aufliegen. Durch Einstellen des Verhältnisses der axialen Verkürzung eines unteren Zahnteils zur Länge eines oberen Zahnteils in axialer Richtung können die Steifigkeit des Geberrads sowie die Bauraumverringerung eingestellt werden.

Die oberen Zahnteile könnten radiale Höhen aufweisen, die mit radialen Tiefen der unteren Zahnteile identisch sind, wobei die Höhen und Tiefen als von der gedachten Zylindermantelfläche in radialer Richtung nach außen bzw. innen abragende Strecken ausgebildet sind. Durch Einstellen des Verhältnisses Höhe zu Tiefe kann die Steifigkeit des Geberrads sowie die mit diesem erzielte Bauraumverringerung eingestellt werden.

Die oberen Zahnteile könnten radiale Höhen aufweisen und die unteren Zahnteile könnten radiale Tiefen aufweisen, wobei die Höhen und Tiefen als von einer zu einem Durchgang konzentrischen gedachten Zylindermantelfläche in radialer Richtung nach außen bzw. innen abragende Strecken ausgebildet sind und wobei das Verhältnis Höhe geteilt durch Tiefe größer 0,3 und kleiner 30, bevorzugt größer 0,3 kleiner 10, besonders bevorzugt größer 0,3 kleiner 4, ist. Das erste Intervall bewirkt eine gute Signalqualität bei nahezu unverminderter Robustheit des Geberrads. Das zweite Intervall bewirkt eine noch ausreichende Signalqualität bei geringfügig verminderter Steifigkeit aber erhöhter Bauraumersparnis. Das dritte Intervall bewirkt eine hohe Bauraumersparnis.

Es könnte eine Aussparung vorgesehen sein, welche der lagerichtigen Positionierung des Geberrads dient. Die Aussparung wird genutzt, um das Geberrad in Bezug auf einen oberen Totpunkt eines Verbrennungsmotors lagerichtig auf der Kurbelwelle zu positionieren.

Das hier beschriebene Geberrad könnte zur Anordnung auf oder an einer Kurbelwelle eines Verbrennungsmotors zur Drehzahlerfassung und/ oder zur Erfassung eines oberen Totpunkts und/ oder zur Erfassung eines Drehwinkels verwendet werden.

Das hier beschriebene Geberrad könnte auch in einem Verbrennungsmotor, der eine gasgeschmierte Gleitringdichtung aufweist, verwendet werden. Hierdurch kann Bauraum eingespart werden. Eine gasgeschmierte Gleitringdichtung dieser Art ist in der DE 10 2011 114 349 A1 offenbart.

### Kurzbeschreibung der Zeichnung

In der Zeichnung zeigen
- Fig. 1: eine Draufsicht auf ein Geberrad,

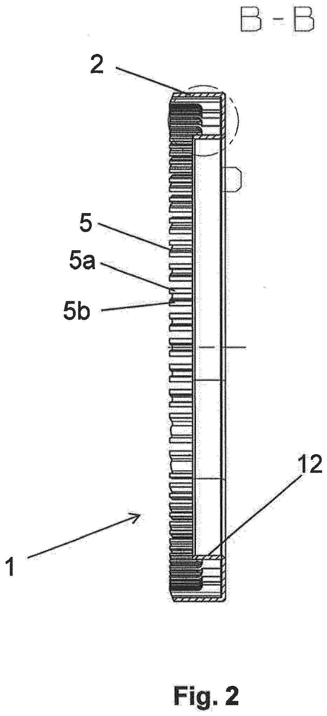

- Fig. 2: eine Schnittansicht des Geberrads gemäß Fig. 1 nach der Schnittlinie B-B,

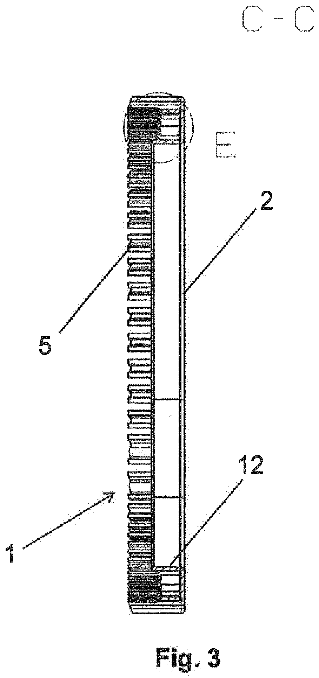

- Fig. 3: eine Schnittansicht des Geberrads gemäß Fig. 1 nach der Schnittlinie C-C,

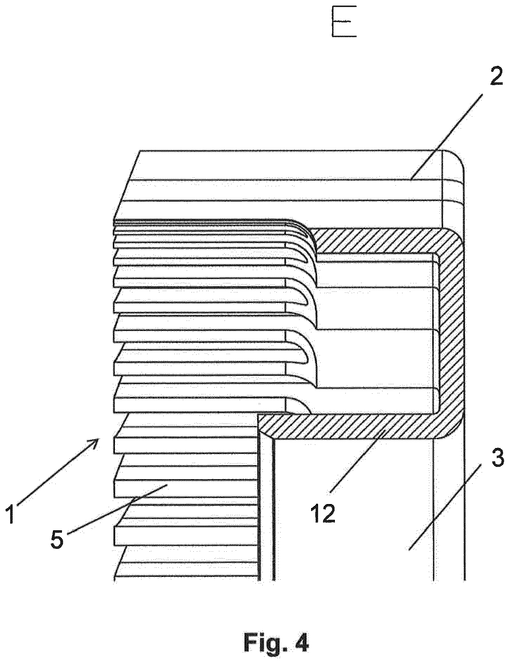

- Fig. 4: eine Detailansicht des gestrichelten Kreises der Fig. 3,

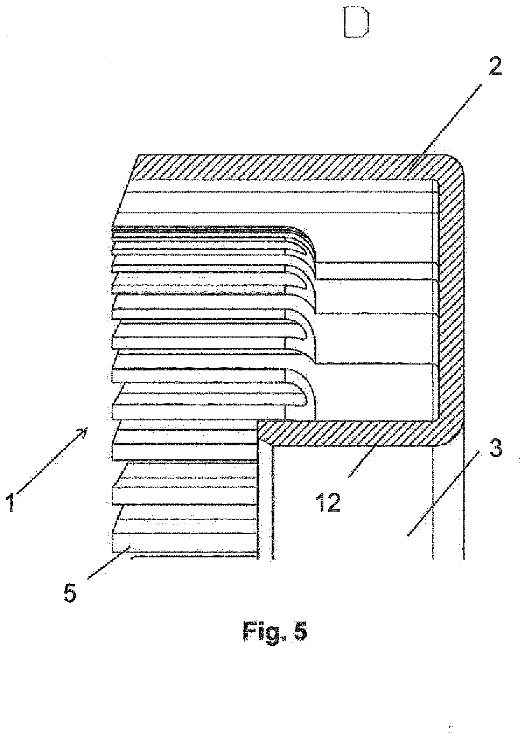

- Fig. 5: eine Detailansicht des gestrichelten Kreises der Fig. 2,
- Fig. 6: eine perspektivische Ansicht des Geberrads gemäß Fig. 1,
- Fig. 7: eine weitere perspektivische Ansicht des Geberrads gemäß Fig. 1,
- Fig. 8: eine stark vergrößerte Darstellung der Zahnstruktur, wobei die sich nach radial außen erstreckende Höhe eines oberen Zahnteils dargestellt ist, und
- Fig. 9: eine stark vergrößerte Darstellung der Zahnstruktur, wobei die sich nach radial innen erstreckende Tiefe eines unteren, axial verkürzten Zahnteils dargestellt ist.

### Ausführung der Erfindung

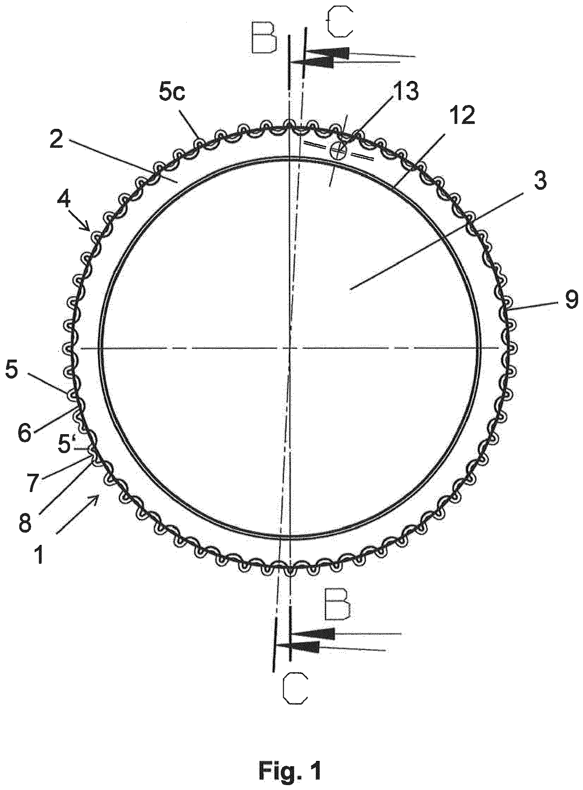

Fig. 1 zeigt ein Geberrad 1, umfassend einen ringförmigen Grundkörper 2, der einen Durchgang 3 zum Durchgriff einer Welle aufweist, wobei vom Grundkörper 2 in axialer Richtung eine Zahnstruktur 4 abragt, wobei die Zahnstruktur 4 obere Zahnteile 5 und untere Zahnteile 6 aufweist, wobei die oberen Zahnteile 5 als Wellenberge und die unteren Zahnteile 6 als Wellentäler ausgestaltet sind.

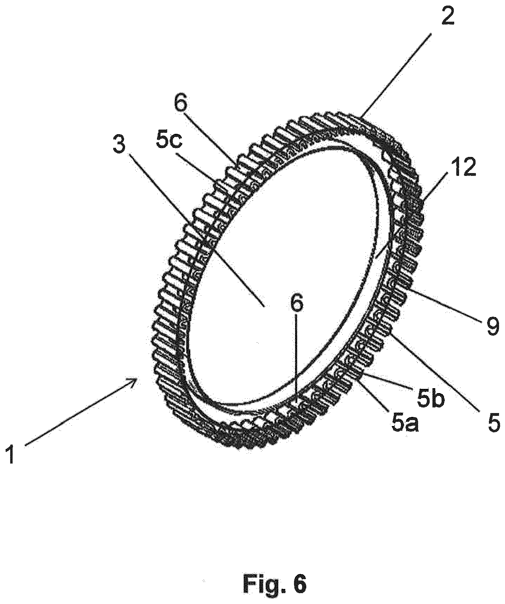

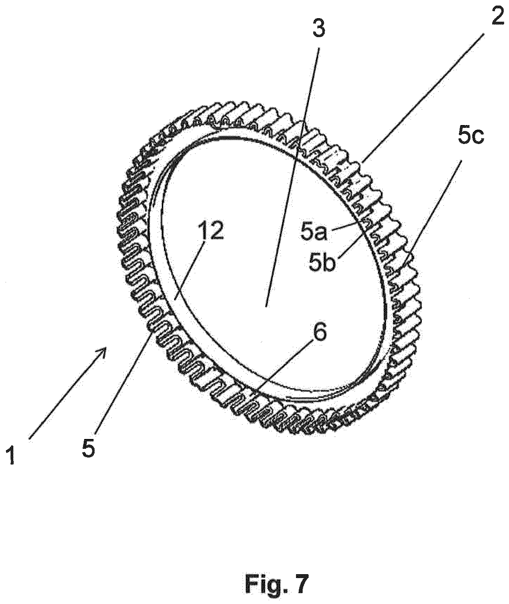

Dieses Geberrad 1 ist auch in den Fig. 6 und 7 jeweils in perspektivischer Ansicht gezeigt.

Fig. 1 zeigt, dass Unregelmäßigkeiten 7 in der Zahnstruktur 4 vorgesehen sind. Konkret sind einige unregelmäßige obere Zahnteile 5' als Doppelspitzen 8 ausgebildet. Dies dient dem in der EP 1 764 488 B1 beschriebenen Zweck.
Nachdem das Geberrad 1 lagerichtig auf einer Kurbelwelle eines Verbrennungsmotors positioniert wurde, können durch die zuvor genannten Unregelmäßigkeiten 7 der obere und untere Totpunkt des Verbrennungsmotors erfasst werden.

Fig. 6 und 7 zeigen, dass die unteren Zahnteile 6, nämlich die Wellentäler, und die oberen Zahnteile 5, also die Wellenberge, sich in axialer Richtung unterschiedlich weit erstrecken. Konkret zeigen die Fig. 6 und 7, dass die unteren Zahnteile 6, nämlich die Wellentäler, gegenüber den oberen Zahnteilen 5, also den Wellenbergen, in axialer Richtung verkürzt ausgebildet sind.

Konkret ragen die oberen Zahnteile 5 über die unteren Zahnteile 6 in axialer Richtung hinaus und sind im Querschnitt jeweils bogenförmig ausgebildet, wobei die beiden Endkanten 5a, 5b eines jeden Bogens 5c auf einer zum Durchgang 3 gedachten konzentrischen Zylindermantelfläche 9 aufliegen.

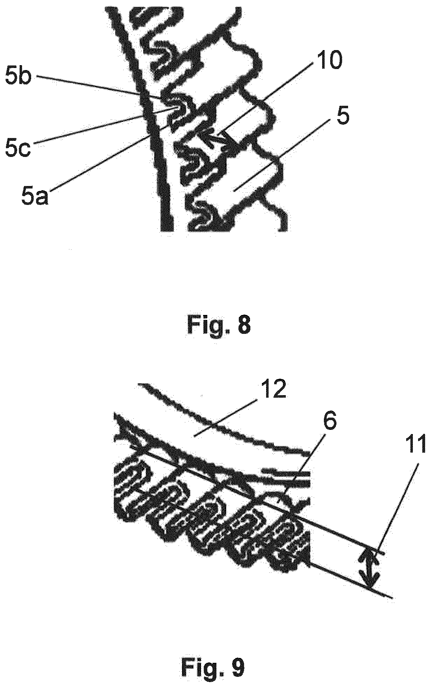

Die Fig. 8 und 9 zeigen, dass die oberen Zahnteile 5 radiale Höhen 10 aufweisen, die mit radialen Tiefen 11 der unteren Zahnteile 6 identisch sind, wobei die Höhen 10 und Tiefen 11 als von der gedachten Zylindermantelfläche 9 in radialer Richtung nach außen bzw. innen abragende Strecken ausgebildet sind. Die Höhen 10 und die Tiefen 11 können jedoch auch unterschiedlich groß sein.

Der Übergang von einer radialen Tiefe 11 zur gedachten konzentrischen Zylindermantelfläche 9 kann stetig oder stufenförmig ausgebildet sein, ganz in Abhängigkeit vom Fertigungsverfahren.

Das Geberrad 1 wird zur Anordnung auf oder an einer Kurbelwelle eines Verbrennungsmotors zur Drehzahlerfassung und/ oder zur Erfassung eines oberen Totpunkts und/ oder zur Erfassung eines Drehwinkels verwendet.

Der Durchgang 3, welcher die Kurbelwelle aufnimmt, sitzt mit einem Presssitz auf der äußeren Umfangsfläche der Kurbelwelle auf. Die Aussparung 13, welche in Fig. 1 dargestellt ist, wird genutzt, um das Geberrad 1 lagerichtig auf der Kurbelwelle zu positionieren. Neben einem Presssitz sind weitere Befestigungsmöglichkeiten denkbar.

Das Geberrad 1 weist einen sich in axialer Richtung erstreckenden Innenkranz 12 auf, der konzentrisch zum Durchgang 3 angeordnet ist. Der Innenkranz 12 kann auf die äußere Umfangsfläche einer nicht gezeigten Welle aufgeschoben werden.

## Patentansprüche

1. Geberrad (1), umfassend einen ringförmigen Grundkörper (2), der auf einer Welle befestigbar ist und einen Durchgang (3) zum Durchgriff einer Welle aufweist, wobei vom Grundkörper (2) in axialer Richtung eine Zahnstruktur (4) abragt, wobei die Zahnstruktur (4) obere Zahnteile (5) und untere Zahnteile (6) aufweist, wobei die oberen Zahnteile (5) als radiale Wellenberge und die unteren Zahnteile (6) als radiale Wellentäler ausgestaltet sind, wobei die unteren Zahnteile (6), nämlich die Wellentäler, und die oberen Zahnteile (5), also die Wellenberge, sich in axialer Richtung unterschiedlich weit erstrecken, **dadurch gekennzeichnet, dass** die unteren Zahnteile (6), nämlich die Wellentäler, gegenüber den oberen Zahnteilen (5), also den Wellenbergen, in axialer Richtung verkürzt ausgebildet sind, wobei die oberen Zahnteile (5) in ihrem in axialer Richtung vom Grundkörper abgewandten Endbereich über die unteren Zahnteile (6) in axialer Richtung hinausragen und im Querschnitt jeweils bogenförmig ausgebildet sind, wobei die beiden Endkanten (5a, 5b) eines jeden Bogens (5c) auf einer zum Durchgang (3) konzentrischen gedachten Zylindermantelfläche (9) aufliegen.

2. Geberrad nach Anspruch 1, **dadurch gekennzeichnet, dass** die oberen Zahnteile (5) radiale Höhen (10) aufweisen und die unteren Zahnteile (6) radiale Tiefen (11) aufweisen, wobei die Höhen (10) und Tiefen (11) als von der Zylindermantelfläche (9) in radialer Richtung nach außen bzw. innen abragende Strecken ausgebildet sind und wobei das Verhältnis Höhe (10) geteilt durch Tiefe (11) größer 0,3 und kleiner 30, bevorzugt größer 0,3 kleiner 10, besonders bevorzugt größer 0,3 kleiner 4, ist.

3. Geberrad nach einem der voranstehenden Ansprüche, **dadurch gekennzeichnet, dass** eine Aussparung (13) vorgesehen ist, welche der lagerichtigen Positionierung des Geberrads (1) dient.

4. Verwendung eines Geberrads (1) nach einem der voranstehenden Ansprüche zur Anordnung auf oder an einer Kurbelwelle eines Verbrennungsmotors zur Drehzahlerfassung und/ oder zur Erfassung eines oberen Totpunkts und/ oder zur Erfassung eines Drehwinkels.

5. Verwendung eines Geberrads nach einem der Ansprüche 1 bis 3 in einem Verbrennungsmotor, der eine gasgeschmierte Gleitringdichtung aufweist.

## Claims

1. Encoder wheel (1), comprising an annular main body (2) which can be fastened on a shaft and has a passage (3) for a shaft to pass through, a tooth structure (4) protruding in the axial direction from the main body (2), the tooth structure (4) having upper tooth parts (5) and lower tooth parts (6), the upper tooth parts (5) being configured as radial crests and the lower tooth parts (6) being configured as radial troughs, the lower tooth parts (6), namely the troughs, and the upper tooth parts (5), that is to say the crests, extending in the axial direction to a different extent, **characterized in that** the lower tooth parts (6), namely the troughs, are of shortened configuration in the axial direction in comparison with the upper tooth parts (5), that is to say the crests, the upper tooth parts (5) protruding, in their end region which faces away from the main body in the axial direction, beyond the lower tooth parts (6) in the axial direction and in each case being of arcuate configuration in cross section, the two end edges (5a, 5b) of each arc (5c) lying on an imaginary cylinder surface (9) which is concentric with respect to the passage (3).

2. Encoder wheel according to Claim 1, **characterized in that** the upper tooth parts (5) have radial heights (10) and the lower tooth parts (6) have radial depths (11), the heights (10) and depths (11) being configured as distances which protrude to the outside and to the inside, respectively, from the cylinder surface (9) in the radial direction, and the ratio of height (10) divided by depth (11) being greater than 0.3 and less than 30, preferably greater than 0.3 and less than 10, particularly preferably greater than 0.3 and less than 4.

3. Encoder wheel according to any of the preceding claims, **characterized in that** a cut-out (13) is provided which serves for correct positioning of the encoder wheel (1).

4. Use of an encoder wheel (1) according to one of the preceding claims for arranging on or at a crankshaft of an internal combustion engine for rotational speed detection and/or for the detection of a top dead centre and/or for the detection of a rotation angle.

5. Use of an encoder wheel according to one of Claims 1 to 3 in an internal combustion engine which has a gas-lubricated mechanical seal.

## Revendications

1. Roue de transmission (1), comprenant un corps de base annulaire (2), qui peut être fixé sur un arbre et qui présente un passage (3) pour le passage d'un arbre, dans laquelle une structure dentée (4) est saillante en direction axiale sur le corps de base (2), dans laquelle la structure dentée (4) présente des parties de dent supérieures (5) et des parties de dent inférieures (6), dans laquelle les parties de dent supérieures (5) sont formées par des crêtes d'onde radiales et les parties de dent inférieures (6) sont formées par des vallées d'onde radiales, dans laquelle les parties de dent inférieures (6), à savoir les vallées d'onde, et les parties de dent supérieures (5), donc les crêtes d'onde, s'étendent différemment loin en direction axiale,
**caractérisée en ce que** les parties de dent inférieures (6), à savoir les vallées d'onde, sont raccourcies par rapport aux parties de dent supérieures (5), donc les crêtes d'onde, dans laquelle les parties de dent supérieures (5) s'étendent, dans leur région d'extrémité éloignée du corps de base en direction axiale, en direction axiale au-delà des parties de dent inférieures (6) et sont respectivement réalisées en forme d'arc en section transversale, dans laquelle les deux bords d'extrémité (5a, 5b) de chaque arc (5c) sont situés sur une surface latérale cylindrique imaginaire (9) concentrique au passage (3).

2. Roue de transmission selon la revendication 1, **caractérisée en ce que** les parties de dent supérieures (5) présentent des hauteurs radiales (10) et les parties de dent inférieures (6) présentent des profondeurs radiales (11), dans laquelle les hauteurs (10) et les profondeurs (11) sont réalisées sous forme de zones s'étendant vers l'extérieur ou vers l'intérieur en direction radiale à partir de la surface latérale cylindrique (9) et dans laquelle le rapport de la hauteur (10) divisée par la profondeur (11) est supérieur à 0,3 et inférieur à 30, de préférence supérieur à 0,3 et inférieur à 10, de préférence encore supérieur à 0,3 et inférieur à 4.

3. Roue de transmission selon l'une quelconque des revendications précédentes, **caractérisée en ce qu'**il est prévu une découpe (13), qui sert pour le positionnement correct de la roue de transmission (1).

4. Utilisation d'une roue de transmission (1) selon l'une quelconque des revendications précédentes à agencer sur ou à un vilebrequin d'un moteur à combustion interne pour la détection du nombre de tours et/ou pour la détection d'un point mort haut, et/ou pour la détection d'un angle de rotation.

5. Utilisation d'une roue de transmission selon l'une quelconque des revendications 1 à 3 dans un moteur à combustion interne, qui présente une garniture mécanique lubrifiée au gaz.
